(19) Europäisches Patentamt
European Patent Office
Office européen des brevets

(11) **EP 3 388 261 B1**

(12) **EUROPEAN PATENT SPECIFICATION**

(45) Date of publication and mention
of the grant of the patent:
**05.02.2020 Bulletin 2020/06**

(51) Int Cl.:
*B29D 30/72* *(2006.01)*          *B60C 1/00* *(2006.01)*
*B60C 13/00* *(2006.01)*          *B60C 13/04* *(2006.01)*

(21) Application number: **16873096.8**

(22) Date of filing: **02.12.2016**

(86) International application number:
**PCT/JP2016/086650**

(87) International publication number:
**WO 2017/099203 (15.06.2017 Gazette 2017/24)**

(54) **TIRE AND METHOD FOR PRODUCING TIRE**

REIFEN UND VERFAHREN ZUR HERSTELLUNG DES REIFENS

PNEU ET PROCÉDÉ DE PRODUCTION DE PNEU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.12.2015 JP 2015242529**

(43) Date of publication of application:
**17.10.2018 Bulletin 2018/42**

(73) Proprietor: **Bridgestone Corporation
Tokyo 104-8340 (JP)**

(72) Inventors:
 • **TAHARA, Seiichi
   Tokyo 104-8340 (JP)**
 • **MUSHA, Shinichi
   Tokyo 104-8340 (JP)**
 • **URATA, Tomohiro
   Tokyo 104-8340 (JP)**
 • **NOMOTO, Tatsuya
   Tokyo 104-8340 (JP)**

(74) Representative: **Oxley, Robin John George
   Marks & Clerk LLP
   15 Fetter Lane
   London EC4A 1BW (GB)**

(56) References cited:
**EP-A1- 1 938 957          WO-A1-2015/104985
WO-A1-2015/145513      JP-A- H05 169 927
JP-A- H05 169 927        JP-A- H11 302 458
JP-A- 2000 025 425       JP-A- 2000 025 425
JP-A- 2006 143 034       JP-A- 2006 143 034
JP-A- 2009 166 526       JP-A- 2009 202 865
JP-A- 2010 115 958       JP-A- 2014 218 096
JP-A- 2015 131 543       US-A1- 2011 094 648**

**Description**

TECHNICAL FIELD

The present disclosure relates to a tire and a method for manufacturing a tire.

BACKGROUND

Generally, a rubber constituting a tire surface is probably degraded and generates cracks when affected by an outer air environment, e.g., under the existence of ozone. The cracks probably progress due to static or dynamic stress and lead to breakage, etc. of the tire. Regarding such problem, known is a technique suppressing cracks generated on a tire surface by manufacturing a tire using a specific rubber composition (see for example JP2006-083264A, JP H05-169927A, and EP 1 938 957 A1).

SUMMARY

(Technical Problem)

The technique as described in JP2006-083264A is an excellent technique for suppressing crack progress. However, recently, since usable distance and usable time of tires tend to be longer, a technique for suppressing crack progress, in particular, crack progress on sidewall portions, of which the outer surface is likely to bear static and dynamic stress, is required. Moreover, a tire on which cracks are unlikely to occur even at a low temperature is required as well.
It thus would be helpful to provide a tire on which cracks on sidewall portion outer surfaces are unlikely to progress, and cracks are unlikely to occur even at a low temperature. Moreover, it would be helpful to provide a method for manufacturing a tire capable of obtaining a tire on which cracks on sidewall portion outer surfaces are unlikely to progress, and cracks are unlikely to occur even at a low temperature.

(Solution to Problem)

The tire of this disclosure comprises a depthwise structure on at least a part of a sidewall portion, the depthwise structure comprising, in a depth direction from a point on a sidewall portion outer surface, a depthwise part I from the sidewall portion outer surface to 0.5 mm and a depthwise part II from 0.5 mm to 1.0 mm, wherein: the depthwise part I and the depthwise part II satisfy the following requirement:

the depthwise part I: a peak temperature T1 (°C) of $\tan\delta$ is -20°C or more and -5°C or less, and when $\tan\delta$ at the peak temperature T1 (°C) is $\alpha$1 and a storage modulus at the peak temperature T1 (°C) is E'1 (MPa), $\alpha$1$\leq$0.90 and E'1$\geq$5MPa; and
the depthwise part II: when $\tan\delta$ at the peak temperature T1 (°C) is $\alpha$2, and a storage modulus at the peak temperature T1 (°C) is E'2 (MPa), $\alpha$2$<$$\alpha$1 and E'2$<$E'1.

The tire of this disclosure has excellent crack progress resistance (a property such that cracks on sidewall portion outer surfaces are unlikely to progress) and low temperature cracking performance (a property such that cracks are unlikely to occur at a low temperature).
In the tire of this disclosure, it is preferable that $\tan\delta$ at 60°C of the depthwise part I is 0.30 or less.
According to this configuration, it is possible to sufficiently ensure the fuel efficiency of the tire.
In the tire of this disclosure, it is preferable that the depthwise structure is formed by: a rubber layer; and a coating layer coating the rubber layer and forming the sidewall portion outer surface.
According to this configuration, it is possible to improve the crack progress resistance, the low temperature cracking performance, and the crack resistance (a property such that cracks are unlikely to occur on the sidewall portion outer surface).
It is preferable that the tire of this disclosure comprises a coated region having the depthwise structure formed by the rubber layer and the coating layer, wherein: in a tire widthwise cross section, there exist two points A, B in the coated region on an interface of the rubber layer and the coating layer, such that when a length of a segment AB is X and a length of the interface between A and B is Y, X$\geq$1mm and Y/X$\geq$1.1, except for two points at which the segment AB crosses outside the tire.
According to this configuration, the coating layer is unlikely to peel from the sidewall portion outer surface.
The method for manufacturing a tire of this disclosure is a method for manufacturing the aforementioned tire, comprising stacking a foam on a surface of an unvulcanized rubber and vulcanizing.

According to the method for manufacturing a tire of this disclosure, it is possible to easily obtain a tire having excellent crack progress resistance and low temperature cracking performance.

(Advantageous Effect)

According to this disclosure, it is possible to provide a tire on which cracks on sidewall portion outer surfaces are unlikely to progress. According to this disclosure, it is possible to provide a method for manufacturing a tire capable of obtaining a tire on which cracks on sidewall portion outer surfaces are unlikely to progress, and cracks are unlikely to occur even at a low temperature.

BRIEF DESCRIPTION OF THE DRAWINGS

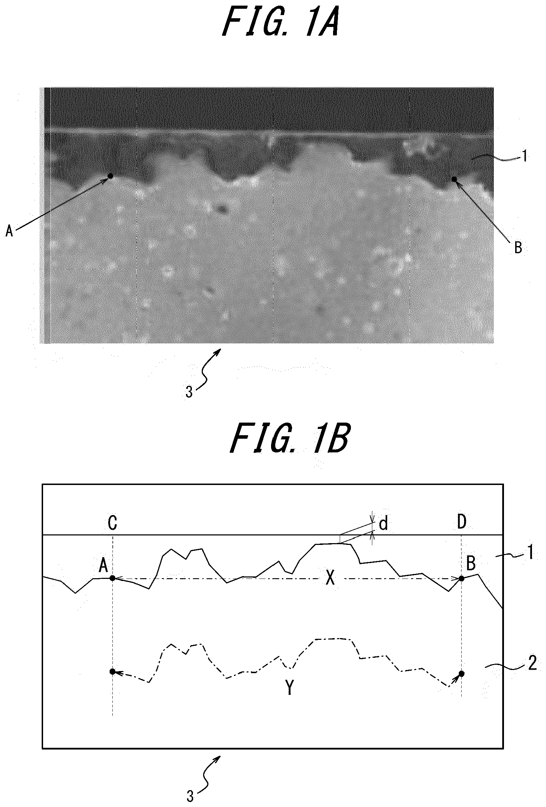

FIG. 1A is a photograph obtained by imaging an interface of a rubber layer and a coating layer (sidewall portion outer surface part) of a sidewall portion, in a tire widthwise cross section of a tire according to an embodiment of this disclosure. FIG. 1B is a schematic view of FIG. 1A.

DETAILED DESCRIPTION

The following describes one embodiment of the tire and the method for manufacturing a tire of this disclosure in detail.

[Tire]

The tire of this disclosure comprises a depthwise structure on at least a part of a sidewall portion, the depthwise structure comprising, in a depth direction from a point on a sidewall portion outer surface, a depthwise part I from the sidewall portion outer surface to 0.5 mm and a depthwise part II from 0.5 mm to 1.0 mm, wherein: the depthwise part I and the depthwise part II satisfy the following requirement:

the depthwise part I: a peak temperature T1 (°C) of $\tan\delta$ is -20°C or more and -5°C or less, and when $\tan\delta$ at the peak temperature T1 (°C) is $\alpha1$ and a storage modulus at the peak temperature T1 (°C) is E'1 (MPa), $\alpha1\leq0.90$ and E'1$\geq$5MPa; and
the depthwise part II: when $\tan\delta$ at the peak temperature T1 (°C) is $\alpha2$, and a storage modulus at the peak temperature T1 (°C) is E'2 (MPa), $\alpha2<\alpha1$ and E'2<E'1.

Namely, the tire of this disclosure has the depthwise structure on at least a part of the sidewall portion, in which the depthwise part I is disposed above the depthwise part II. Moreover, there exist at least one point on the sidewall portion outer surface such that the depthwise part from the sidewall portion outer surface to 0.5 mm satisfies the requirement of the aforementioned depthwise part I, and the depthwise part from 0.5 mm to 1.0 mm satisfies the requirement of the aforementioned depthwise part II.

Note that $\alpha2$ and E'2 in the depthwise part II are measurements at the peak temperature T1 (°C) of the depthwise part I, without being related to the peak temperature of $\tan\delta$ of the depthwise part II.

In the present Specification, the term "tire outer surface" refers to an outer surface of the tire partitioned by two bead heel portions. Moreover, the term "sidewall portion outer surface" refers to an outer surface from a tread ground contact edge to a bead heel portion.

Here, the term "tread ground contact edge" refers to both tread widthwise ends in a surface in contact with a flat plate, when the tire attached to an applicable rim and filled to a prescribed internal pressure is placed perpendicularly to the flat plate in a stationary state, and is applied with a load corresponding to a maximum load capability.

Here, the "applicable rim" is a valid industrial standard for the region in which the tire is produced or used, and refers to an approved rim of an applicable size (the "Measuring Rim" in the STANDARDS MANUAL of ETRTO (the European Tyre and Rim Technical Organization in Europe), and the "Design Rim" in the "YEAR BOOK" of TRA (the Tire and Rim Association, Inc.)) according to the "JATMA Year Book" of the JATMA (Japan Automobile Tire Manufacturers Association) in Japan, the "STANDARDS MANUAL" of ETRTO in Europe, or the "YEAR BOOK" of TRA in the United States of America. Moreover, the "prescribed internal pressure" refers to an air pressure in accordance with the maximum load capability corresponding to the maximum load capability of the applicable size/ply rating described by the aforementioned JATMA, etc. The "maximum load capability" refers to the maximum mass so as to allow the tire to bear according to the aforementioned standards.

In the present Specification, the term "depth" refers to a length starting at the outer surface toward an inner side in a direction perpendicular to the outer surface. For example, the depth from the sidewall portion outer surface to 0.5 mm refers to a depth from any point on the sidewall portion outer surface to a length of 0.5 mm starting from the point in the direction perpendicular to the sidewall portion outer surface.

Examples of tires of the present embodiment include a tire having an ordinary structure, including: a tread portion; a carcass having a pair of sidewall portions extending from both ends of the tread portion toward a tire radial inner side, and bead portions respectively extending from the sidewall portions toward the tire radial inner side, the carcass extending toroidally between the pair of bead portions; and a belt arranged on a tire radial outer side of the carcass.

(Sidewall portion)

-Depthwise part I-

The peak temperature $T_1$ of the loss coefficient $\tan\delta$ of the depthwise part I, i.e., the temperature at which the loss coefficient $\tan\delta$ approaches a peak value, is -20°C or more and -5°C or less, preferably -17°C or more and -9°C or less, more preferably -17°C or more and -10°C or less. By setting the peak temperature of $\tan\delta$ to -20°C or more, it is possible to suppress crack progress on the sidewall portion outer surface. Moreover, by setting the same to -5°C or less, tire cracking is unlikely to occur at a low temperature.

Note that physical properties of the depthwise part I are measured by using a specimen obtained by cutting out a part of the depth from 0 mm to 0.5 mm from the sidewall portion outer surface (a rectangular parallelepiped specimen obtained by cutting out a part of width: 5 mm, length: 40 mm, and depth: 0 mm to 0.5 mm). Moreover, in the present Specification, $\tan\delta$ and the peak temperature of $\tan\delta$ refer to values measured according to JIS K 6394.

$\tan\delta$ at the peak temperature $T_1$ of the depthwise part I, i.e., the peak value of $\tan\delta$, $\alpha_1$, is 0.90 or less, preferably 0.80 or less, more preferably 0.65 or less. Moreover, $\alpha_1$ is preferably 0.40 or more. By setting $\alpha_1$ to 0.90 or less, it is possible to suppress crack progress on the sidewall portion outer surface. By setting $\alpha_1$ to 0.4 or more, it is possible to improve the anti-cut resistance from the viewpoint of energy dissipation of the tire.

The storage modulus $E'_1$ at the peak temperature $T_1$ (°C) of the depthwise part I is 5 MPa or more, preferably 7 MPa or more, more preferably 10 MPa or more. Moreover, $E'_1$ is preferably 300 MPa or less, more preferably 80 MPa or less. By setting $E'_1$ to 5 MPa or more, the sidewall portion is hard at an appropriate degree, which improves the anti-cut resistance due to small stone, etc. Moreover, by setting the same to 300 MPa or less, the sidewall portion outer surface does not become excessively hard, which improves the ride comfort.

The storage modulus in the present Specification is a value measured according to the following method in "(Storage modulus)" of "(Evaluation)".

$\tan\delta$ at 60°C of the depthwise part I is preferably 0.30 or less, more preferably 0.28 or less. Moreover, it is preferable that $\tan\delta$ at 60°C of the depthwise part I is 0.20 or more. By setting $\tan\delta$ at 60°C of the depthwise part I to 0.30 or less, the fuel efficiency performance and the rolling resistance performance are improved. Moreover, by setting the same to 0.20 or more, the sidewall portion becomes likely to absorb energy, which enables further suppression of crack progress.

-Depthwise part II-

$\tan\delta$ and $\alpha_2$ at the peak temperature $T_1$ of the depthwise part II satisfy $\alpha_2 < \alpha_1$. A difference of $\alpha_1$ and $\alpha_2$ is preferably 0.2 or more and 0.7 or less, more preferably 0.3 or more and 0.7 or less. By setting $\tan\delta$ lower on the inner side than the sidewall portion outer surface, i.e., $\alpha_2 < \alpha_1$, energy absorption in the vicinity of the sidewall portion outer surface is increased, and energy becomes likely to be absorbed at ends of cracks, which suppresses crack progress.

The $\alpha_2$ is preferably 0.1 or more and 0.5 or less, more preferably 0.2 or more and 0.4 or less. By setting $\alpha_2$ to 0.1 or more, it is possible to improve the anti-cut resistance due to energy dissipation. Moreover, by setting the same to 0.4 or less, the fuel efficiency and the rolling resistance of the tire are improved.

Note that physical properties of the depthwise part II are measured by using a specimen obtained by cutting out a part of the depth from 0.5 mm to 1.0 mm from the sidewall portion outer surface (a rectangular parallelepiped specimen obtained by cutting out a part of width: 5 mm, length: 40 mm, and depth: 0.5 mm to 1.0 mm).

The storage modulus $E'_2$ at the peak temperature $T_1$ (°C) of the depthwise part II satisfies $E'_2 < E'_1$. It is preferable that a difference of $E'_1$ and $E'_2$ is 12 MPa or more and 300 MPa or less. By satisfying $E'_2 < E'_1$, the energy absorption on the sidewall portion surface is increased, which suppresses crack progress.

The $E'_2$ is preferably 2 MPa or more and 15 MPa or less, more preferably 2 MPa or more and 10 MPa or less, even more preferably 2 MPa or more and 7 MPa or less. By setting $E'_2$ to 2 or more, deflection of the tire is decreased, which improves the fuel efficiency and the rolling resistance of the tire. Moreover, by setting the same to 15 MPa or less, it is possible to maintain appropriate hardness of the tire.

A ratio of an outer surface area of a region in which the depthwise structure exists with a sidewall portion entire outer surface area as 100% is preferably 1% or more and 100% or less, more preferably 20% or more, even more preferably 50% or more. Moreover, the ratio may be either 99% or less or 95% or less.

Moreover, a ratio of a surface area of the coated region with the sidewall portion entire outer surface area as 100% is preferably 1% or more and 100% or less, more preferably 20% or more, even more preferably 50% or more. Moreover, the ratio may be either 99% or less or 95% or less.

The following describes an example of the sidewall portion of the tire of the present embodiment by referring to FIG. 1.

FIG. 1 illustrates the vicinity of the outer surface of the sidewall portion, which is a coated region 3 formed by: a rubber layer 2; and a coating layer 1 coating the surface of the rubber layer 2 and forming the sidewall portion outer surface, the entire region of the coated region 3 having the aforementioned depthwise structure.

The depthwise part I may be either formed by a laminated structure of the coating layer 1 and the rubber layer 2 or formed by only the coating layer 1. Moreover, the depthwise part II may be either formed by a laminated structure of the coating layer 1 and the rubber layer 2 or formed by only the rubber layer 2. Among these, from the viewpoint of further enhancing the adhesive strength of the rubber layer 2 and the coating layer 1, and further improving the crack progress resistance and the crack resistance of the sidewall portion outer surface, it is preferable that the depthwise part I is formed by a laminated structure of the coating layer 1 and the rubber layer 2, and the depthwise part II is formed by only the rubber layer 2.

In the sidewall portion of the tire of the present embodiment, the coated region refers to a region formed by the rubber layer and the coating layer, of which the depthwise part from the depth of 0 mm to 1.0 mm is the aforementioned depthwise structure. Moreover, the coated region refers to a part of the sidewall portion outer surface part, the part being a partial region of the part in the vicinity of the sidewall portion outer surface including the coating layer and the rubber layer, in which the coating layer forms at least a part of the sidewall portion outer surface.

Examples of the rubber forming the rubber layer 2 include a rubber containing a rubber component, compounding ingredients, etc. (a rubber obtained by crosslinking a rubber composition containing a rubber component, compounding ingredient, etc.).

The rubber component may be appropriately selected depending on the purpose. Examples of the rubber component include natural rubber, epoxidized natural rubber, various butadiene rubbers, various styrene-butadiene copolymer rubbers, isoprene rubber, butyl rubber, bromide of a copolymer of isobutylene and p-methylstyrene, halogenated butyl rubber, acrylonitrile butadiene rubber, chloroprene rubber, ethylene-propylene copolymer rubber, ethylene-propylene-diene copolymer rubber, styrene-isoprene copolymer rubber, styrene- isoprene-butadiene copolymer rubber, isoprene-butadiene copolymer rubber, chlorosulfonated polyethylene, acryl rubber, epichlorohydrin rubber, polysulfide rubber, silicone rubber, fluororubber, and urethane rubber. The rubber components may be used singly or in a combination of two or more.

Examples of the compounding ingredient include a guanidine based, aldehyde-amine based, aldehyde-ammonia based, thiazole based, sulfenamide based, thiourea based, thiuram based, dithiocarbamate based, or xanthate based vulcanization accelerator; a vulcanizing agent such as sulfur; an age resistor such as amine based age resistor and phenol based age resistor; a wax such as synthetic wax and natural wax; an oil such as aroma oil; a filler such as silica, carbon black, and calcium carbonate; a silane coupling agent; an organic acid compound such as stearic acid; zinc oxide; a reinforcing agent; a softener; a colorant; a flame retardant; a lubricant; a plasticizer; a processing aid; and a thermoplastic resin / thermosetting resin. The compounding ingredients may be used singly or in a combination of two or more.

Examples of the coating layer 1 include a coating layer formed with an elastomer (urethane resin, epoxy resin, styrene based thermoplastic elastomer, etc.); and a coating layer formed with a rubber material such as styrene-butadiene copolymer rubber, butyl rubber, and ethylene-propylene-diene copolymer rubber. The elastomer here is exclusive of resins without elastic deformation (e.g., a phenol resin without elastic deformation, an acryl resin without elastic deformation). Among these, from the viewpoint of further suppressing crack progress on the sidewall portion outer surface and obtaining excellent crack resistance as well, an urethane resin layer is preferable.

The urethane resin layer contains at least urethane resin, and may further contain other resins (e.g., acryl resin, epoxy resin, phenol resin), etc.

Preferable examples of the urethane resin include a two-component curing type urethane resin prepared with polyol and isocyanate.

Examples of the polyol include low molecular weight polyol and high molecular weight polyol. Examples of the low molecular weight polyol include ethylene glycol, propylene glycol, 1,4-butanediol, glycerol, trimethylolpropane, 1,2,6-hexanetriol, erythritol, and sorbitol. Examples of the high molecular weight polyol include: a polyether based polyol such as a polyoxyalkylene-polyol, such as polyoxyethylene glycol, polyoxyethylene glyceryl ether, polyoxyethylene trimethylolpropane ether, polyoxyethylene sorbitol ether, polyoxypropylene bisphenol A ether, polyoxypropylene glycol, polyoxypropylene glyceryl ether, polyoxypropylene trimethylolpropane ether, polyoxypropylene sorbitol ether, polyoxyethylene-polyoxypropylene glycol, polyoxyethylene-polyoxypropylene glyceryl ether, polyoxyethylene-polyoxypropylene trimethylolpropane ether, polyoxyethylene-polyoxypropylene sorbitol ether, and polyoxyethylene-polyoxypropylene bisphenol A ether; and a polyester based polyol, such as a condensate of a polyhydric alcohol such as ethylene glycol, propylene glycol, 1,4-butanediol, diethylene glycol, neo pentyl glycol, and trimethylolpropane, and a polycarboxylic acid such as phthalic acid, maleic acid, malonic acid, succinic acid, adipic acid, and terephthalic acid, the condensate having a hydroxyl group at its terminal; and a ring-opening polymerization product of the polyhydric alcohol and a cyclic lactone such as γ-butyrolactone, δ-valerolactone, ε-captolactone and the like, the ring-opening polymerization product having a hydroxyl group at its terminal. Specific examples of the polyester based polyol include polyethylene adipate polyol, polybutylene adipate polyol, polyethylene-butylene adipate polyol, and polyethylene terephthalate polyol. The polyols may be used singly or in a combination of two or more.

The isocyanate is an organic isocyanate having two or more isocyanate groups in each molecule, and may be at least one selected from 4,4'-diphenylmethane diisocyanate, tolylene diisocyanate, dicyclohexylmethane diisocyanate, xylene diisocyanate, hexamethylene diisocyanate, isophorone diisocyanate, o-toluidine diisocyanate, naphthylene diisocyanate, xylylene diisocyanate, lysine diisocyanate, or polymethylene polyphenylene polyisocyanate. Among these, an aromatic isocyanate such as hexamethylene diisocyanate, 4,4'-diphenylmethane diisocyanate, tolylene diisocyanate, xylene diisocyanate, o-toluidine diisocyanate, naphthylene diisocyanate, xylylene diisocyanate, and polymethylene polyphenylene polyisocyanate is preferable. Moreover, 4,4'-diphenylmethane diisocyanate (MDI) and/or tolylene diisocyanate (TDI) are particularly preferable. When using both, any ratio of parts by mass of TDI / parts by mass of MDI may be used, but a range of 0.05 or more and 20 or less is preferable, and a range of 0.2 or more and 5 or less is more preferable.

From the viewpoint of further enhancing the adhesive strength with the rubber layer 2 and further enhancing the likeliness to fit with the rubber layer 2, a ratio of urethane resin in the urethane resin layer is preferably 10 mass% or more and 100 mass% or less, more preferably 50 mass% or more and 100 mass% or less per 100 mass% of the urethane resin layer. Moreover, from the viewpoint of the balance of mechanical properties with the rubber layer 2, it is preferable that a resin component in the urethane resin layer is only urethane resin (exclusive of other resins).

It is preferable that on the sidewall portion, in a tire widthwise cross section, there exist two points A, B in the coated region 3 on an interface of the rubber layer 2 and the coating layer 1, such that when a length of a segment AB is X and a length of the interface between A and B is Y, X≥1mm and Y/X≥1.1. Note that the two points at which the segment AB connecting the two points A, B crosses outside the tire are excluded.

The length X in the conditions X≥1mm and Y/X≥1.1 is preferably 1 mm or more and 5 mm or less, more preferably 1 mm. Moreover, Y/X in the conditions X≥1mm and Y/X≥1.1 is preferably 1.2 or more, more preferably 1.3 or more, and preferably 4.0 or less.

By setting the Y/X to 1.1 or more, the coating layer 1 fits with the recesses and projections on the rubber layer 2 surface, and the rubber layer 2 and the coating layer 1 tangle with each other at the interface of the rubber layer 2 and the coating layer 1 in a complicated manner, which achieves an anchor effect and significantly improves the adhesive strength of the coating layer 1.

Note that the length Y of the interface between the two points A, B is a length of a line connecting the two points A, B along the interface of the rubber layer 2 and the coating layer 1 (the length over which the two points A, B extend on the interface) (see FIG. 1B). For examples, in the case where no bubbles, etc. exist between the rubber layer 2 and the coating layer 1, the interface of the rubber layer 2 and the coating layer 1 is the rubber layer surface (see FIG. 1B).

In the tire of the present embodiment, from the viewpoint that the coating layer bites into the rubber layer in a complicated manner so as to allow the coating layer and the rubber layer to tangle with each other in a complicated manner and to improve the adhesive strength of the rubber layer 2 and the coating layer 1, it is preferable that between the two points A, B, a maximum height roughness Ry of the interface of the rubber layer 2 and the coating layer 1 is 5 μm or more and 400 μm or less.

Note that the maximum height roughness Ry is a value measured according to JIS B 0601 (2001).

As long as the two points A, B are selected on the interface of the rubber layer 2 and the coating layer 1, the line connecting the two points A, B on the interface may include a part without the coating layer disposed thereon (a part serving as the sidewall portion outer surface).

In the part between the two points A, B without the coating layer disposed thereon, a length of a part without the coating layer 1 disposed thereon on a line L on the sidewall portion outer surface connecting a foot C of a perpendicular from the point A to the surface of the coated region 3 (C in FIG. 1B) and a foot D of a perpendicular from the point B to the surface of the coated region 3 (D in FIG. 1B) is preferably 40% or less, more preferably 20% or less of a length of the line L (100%). Among these, it is preferable that there exist no parts without the coating layer 1 disposed thereon on the line L.

Moreover, from the viewpoint of the adhesive strength of the rubber layer 2 and the coating layer 1, it is preferable that the length of the part without the coating layer 1 disposed thereon on the line L is less than 200 μm.

From the viewpoint of further enhancing the adhesive strength of the rubber layer 2 and the coating layer 1, and further improving the crack resistance of the sidewall portion outer surface, an average thickness of the coating layer 1 is preferably 15 μm or more and 400 μm or less, more preferably 30 μm or more and 150 μm or less.

Note that the average thickness of the coating layer 1 refers to an average value of a thickness of the coating layer measured among all points between the two points A, B, in a tire widthwise cross section, with a length from a specific point on the interface between the two points A, B to a foot of a perpendicular from the point to the tire outer surface (the coated region surface and the coating layer surface) as a thickness of the coating layer at this point.

In the case where there exist no parts without the coating layer 1 disposed thereon on the line connecting the two points C, D on the tire outer surface, from the viewpoint of excellent ozone resistance, a minimum layer thickness d of the coating layer between the two points A, B is preferably 1 $\mu$m or more and 300 $\mu$m or less, more preferably 15 $\mu$m or more and 150 $\mu$m or less.

Note that a minimum layer thickness d of the coating layer between the two points C, D is a minimum value of the thickness of the coating layer when obtaining the average thickness of the coating layer 1 in a tire widthwise cross section including the two points A, B (see FIG. 1B).

(Parts other than sidewall portion)

Configuration of parts other than the sidewall portion of the tire of the present embodiment (e.g., tread portion and bead portion) is not specifically limited. The depthwise structure may have parts other than the sidewall portion of the tire disposed thereto.

The tire of the present embodiment may be used as a tire for automobile, heavy load vehicle (construction and mining vehicle, truck, bus, etc.), motorcycle, bicycle, etc.

[Method for manufacturing tire]

The method for manufacturing a tire of this disclosure is a method for manufacturing the aforementioned tire of this disclosure, including stacking a foam on a surface of an unvulcanized rubber (an unvulcanized tire) and vulcanizing. For example, from the viewpoint that during vulcanization, the foam is likely to bite into the surface of the rubber layer with a complicated surface shape so as to allow the coating layer formed by the foam and the rubber layer to tangle with each other in a complicated manner, which increases the Y/X, achieves an anchor effect and improves the adhesive strength of the rubber layer surface and the coating layer, it is preferable that the tire of the aforementioned embodiment of this disclosure is manufactured with the aforementioned method for manufacturing a tire of this disclosure.

Note that the tire of this disclosure may be manufactured with a method including stacking a resin sheet or a rubber sheet on an unvulcanized rubber (unvulcanized tire) and vulcanizing, etc.

Note that in the case where the coating layer is disposed on the surface of the tire after molding and vulcanization, the surface of the vulcanized tire (rubber layer surface) is approximately flat, and there is a risk that the rubber layer and the coating layer do not tangle with each other in a complicated manner and the adhesive strength is insufficient.

In the method for manufacturing a tire of the present embodiment, from the viewpoint of easily forming a structure such that the rubber layer and the coating layer tangle with each other, it is preferable that the foam is an urethane resin foam. The urethane resin foam may be manufactured by, e.g., foaming a composition containing the urethane resin and a foaming agent. The composition for forming the urethane resin foam may further contain other resins such as acryl resin, epoxy resin, phenol resin and the like, a surfactant, a solvent, etc.

In the method for manufacturing a tire of the present embodiment, examples of the urethane resin in the urethane resin foam include the same urethane resins as mentioned above regarding the urethane resin layer.

In the method for manufacturing a tire of the present embodiment, examples of the foaming agent include water, a hydrocarbon compound (propane, butane, pentane, etc.), carbon dioxide gas, nitrogen gas, and air.

In the method for manufacturing a tire of the present embodiment, from the viewpoint that bubbles are unlikely to occur between the rubber layer 2 and the coating layer 1, which further improves the adhesive strength of the rubber layer 2 and the coating layer 1, a bubble structure of the foam is preferably a semi-continuous semi-independent bubble structure (a bubble structure with independent bubble structure and continuous bubble structure coexisting) or a continuous bubble structure.

In the method for manufacturing a tire of the present embodiment, from the viewpoint of further improving the adhesive strength of the rubber layer 2 and the coating layer 1, an expansion ratio of the foam is preferably 50 times or less, more preferably 20 times or less, even more preferably 19 times or less. Moreover, from the viewpoint that bubbles are unlikely to occur between the rubber layer 2 and the coating layer 1, which further improves the adhesive strength of the rubber layer 2 and the coating layer 1, 4 times or more is preferable, and 8 times or more is more preferable.

Note that the expansion ratio refers to "density before foaming / density after foaming". Namely, it refers to "density of the composition for forming the foam without the foaming agent / density of the foam". Note that the volume of the foam refers to a volume measured according to JIS K 7222.

The density of the urethane resin foam is not specifically limited, but from the viewpoint of further improving the adhesive strength of the rubber layer and the urethane resin layer, 20 kg/m$^3$ or more and 150 kg/m$^3$ or less is

preferable, 20 kg/m$^3$ or more and 100 kg/m$^3$ or less is more preferable, and 51 kg/m$^3$ or more and 100 kg/m$^3$ or less is even more preferable.

Note that the density refers to a value measured according to JIS K 7222.

In the method for manufacturing a tire of the present embodiment, examples of the method for vulcanization include a method stacking the foam on the unvulcanized rubber, disposing them on an inner surface of a mold, and performing vulcanization and molding.

The vulcanization temperature may be, e.g., 140°C or more and 200°C or less. The vulcanization time may be, e.g., 5 minutes or more and 60 minutes or less.

Note that the tire of the present embodiment may be manufactured with a method stacking a resin sheet or rubber sheet on an unvulcanized rubber surface and vulcanizing, etc. Examples of the method for vulcanization include a method stacking the resin sheet or the rubber sheet on the unvulcanized rubber, disposing them on an inner surface of a mold, and performing vulcanization and molding. The vulcanization temperature may be, e.g., 140°C or more and 200°C or less. The vulcanization time may be, e.g., 5 minutes or more and 60 minutes or less.

The resin sheet (film) may be manufactured by, e.g., applying a composition containing resin on a release film, and performing photo-curing or thermal curing. Examples of the resin sheet include a resin sheet obtained with a resin material such as urethane resin, epoxy resin, styrene based resin and the like.

Examples of the rubber sheet include a rubber sheet obtained with the same rubber component as mentioned above regarding the rubber layer.

From the viewpoint of ozone resistance and improvement of peeling avoidance, a thickness of the stacked resin sheet or rubber sheet is preferably 1 μm or more and 500 μm or less, more preferably 30 μm or more and 400 μm or less.

From the viewpoint that bubbles are unlikely to occur between the rubber layer 2 and the coating layer 1, which further improves the adhesive strength of the rubber layer 2 and the coating layer 1, the resin sheet or rubber sheet may have, e.g., holes penetrating the sheet.

EXAMPLES

The present disclosure is described in more detail below with reference to Examples, by which the present disclosure is not intended to be limited in any way.

(Example 1)

An urethane resin foam (ester based urethane, trade name "EVERLIGHT SF HZ80", manufactured by Bridgestone Chemitech Co.,Ltd.) of density: 100 kg/m$^3$, expansion ratio: 10 times, and thickness: 1.0 mm was laminated on an entire outer surface of a sidewall portion of an unvulcanized tire (tire size: 195/65R15), and vulcanized, so as to manufacture a urethane resin coated tire having a coating layer of urethane resin on the entire outer surface of the sidewall portion.

(Example 2)

An urethane resin coated tire was manufactured similarly as Example 1, except that used was an urethane resin foam (trade name "EVERLIGHT BJ", manufactured by Bridgestone Chemitech Co.,Ltd.) of density: 32 kg/m$^3$, expansion ratio: 31 times, and thickness: 1.0 mm.

(Example 3)

An urethane resin coated tire was manufactured similarly as Example 1, except that used was an urethane resin foam (trade name "EVERLIGHT SF HZ80", manufactured by Bridgestone Chemitech Co.,Ltd.) of density: 100 kg/m3, expansion ratio: 10 times, and thickness: 1.0 mm.

(Example 4)

Similarly as Example 1, a rubber sheet was laminated on an entire outer surface of a sidewall portion of an unvulcanized tire (tire size: 195/65R15), and vulcanized, so as to manufacture a urethane resin coated tire having a coating layer of urethane resin on the entire outer surface of the sidewall portion.

(Comparative Example 1)

A tire was manufactured similarly as Example 1, except that used was an urethane resin foam (ester based urethane, trade name "EVERLIGHT FXBL", manufactured by Bridgestone Chemitech Co.,Ltd.) of density: 50 kg/m$^3$, expansion ratio: 20 times, and thickness: 1.0 mm.

(Comparative Example 2)

A tire was manufactured by vulcanizing an unvulcanized tire (tire size:195/65R15) similar as example 1 without coating it with anything.

[Evaluation]

The tires obtained in the Examples and Comparative Examples were subjected to the following measurement. The result was as indicated in Table 2.

(Tan$\delta$, peak temperature of tan$\delta$)

A rectangular parallelepiped specimen obtained by cutting out a part of width: 5 mm, length 40 mm, and depth: 0.5 mm (a specimen of part I) and a rectangular parallelepiped specimen obtained by cutting out a part of width: 5 mm, length 40 mm, and depth: 0.5 mm to 1.0 mm directly below the specimen of part I (a specimen of part II) were cut out from the sidewall portion of each tire obtained in the Examples and Comparative Examples, and measured of tan$\delta$ by using a spectrometer (manufactured by Toyo Seiki Co., Ltd.) according to JIS K 6394 in a temperature range of -25°C or more and 60°C or less at a heating rate of 2°C/min. A peak temperature T1 at the peak of tan$\delta$, a tan$\delta$ value at the peak temperature T1 and a tan$\delta$ value at 60°C thereof were certified.

(Storage modulus)

By using the aforementioned specimen of part I and specimen of part II, a storage modulus (MPa) was measured by using a spectrometer (manufactured by Toyo Seiki Co., Ltd.), at the conditions of chuck spacing: 10 mm, initial strain: 150 $\mu$m, dynamic strain: 1%, frequency: 52 Hz, and peak temperature: T1 (°C).

(Y/X (ratio of length X of segment AB to length Y of interface between AB))

Each tire obtained in the Examples and Comparative Examples was cut in the tire width direction, and its section in the tire widthwise cross section of the sidewall portion was imaged. In the obtained image, two points A, B on the interface of the rubber layer and the coating layer in the coated region were determined such that the length of the segment AB was 1 mm, and the length y (mm) of the interface between the two points A, B was measured. The ratio of the length Y of the interface between AB to the length X of the segment AB (Y/X) was calculated according to the following formula.

$$Y/X = \text{length of interface between AB} / \text{length between AB} = y/1$$

Note that in the tire of Comparative Example 2, which did not have a coated region, Y/X=1.

(Crack progress resistance)

Each tire obtained in the Examples and Comparative Examples was exposed for 7 days according to JIS K6259 by using an ozone weather meter (trade name "OMS-H", manufactured by Suga Test Instruments Co.,Ltd.) at the conditions of temperature: 40°C, tensile strain: 30%, and ozone concentration: 50 pphm. After 7 days, the coated region of the tire outer surface (the tire surface as for Comparative Example 2) was observed, and its crack progress resistance was evaluated according to JIS K6259 with the following standard.

(Standard)

0: No cracks

1: Cracks are invisible to the naked eye but confirmable with a 10 times magnifying glass.

2: Cracks are confirmable to the naked eye.

3: Cracks are comparatively deep and large (less than 1 mm).

4: Cracks are deep and large (1 mm or more and less than 3 mm).

5: Cracks of 3 mm or more, or likely to cause breakage.

(Low temperature cracking performance)

A rectangular parallelepiped specimen obtained by cutting out a part of width: 5 mm, length: 40 mm, and depth: 1 mm was cut out from the sidewall portion of each tire obtained in the Examples and Comparative Examples example. The specimen was frozen at a temperature of -30°C, then taken out and directly bent by 90°. The coated region of the tire outer surface was visually observed, and its low temperature cracking resistance was evaluated with the following standard.

(Evaluation standard)

Good: no cracks observable on the coated region surface after bending.

Poor: cracks observable on the coated region surface after bending.

[Table 2]

| | | | Example 1 | Example 2 | Example 3 | Example 4 | Comparative Example 1 | Comparative Example 2 |
|---|---|---|---|---|---|---|---|---|
| Material | Coated layer | | Urethane resin foam Density: 100kg/m$^3$ Expansion ratio: 10 times | Urethane resin foam Density: 32kg/m$^3$ Expansion ratio: 31 times | Urethane resin foam Density: 100kg/m$^3$ Expansion ratio: 10 times | Rubber sheet | Urethane resin foam Density: 50kg/m$^3$ Expansion ratio: 20 times | - |
| | Rubber layer | | NR/BR | NR/BR | NR/BR | NR/BR | NR/BR | NR/BR |
| Sidewall portion | Part I | Peak temperature T1 (°C) of tan$\delta$ | -14 | -20 | -19 | -14 | 8 | Less than-25 |
| | | $\alpha$1 | 0.57 | 0.35 | 0.78 | 0.83 | 0.52 | - |
| | | E'1 (MPa) | 26.23 | 68.90 | 19.43 | 47.30 | 16.44 | - |
| | | 60°C tan$\delta$ | 0.25 | 0.15 | 0.20 | 0.26 | 0.26 | 0.25 |
| | Part II | $\alpha$2 | 0.32 | 0.32 | 0.32 | 0.32 | 0.43 | - |
| | | E'2 (MPa) | 13.89 | 13.89 | 13.89 | 13.89 | 9.96 | - |
| | Y/X | | 1.1 | 1.2 | 1.1 | 1.0 | 1.1 | 1.0 |
| Evaluation | Crack progress resistance | | 1 | 1 | 1 | 1 | 1 | 5 |
| | Low temperature crack resistance | | Good | Good | Good | Good | Poor | Good |

# EP 3 388 261 B1

INDUSTRIAL APPLICABILITY

On the tire of the present embodiment, cracks are unlikely to progress on the sidewall portion outer surface.

REFERENCE SIGNS LIST

1 coating layer
2 rubber layer
3 coated region
A point of interface of rubber layer and coating layer on coated region
B point of interface of rubber layer and coating layer on coated region
X length of segment AB
Y length of interface between AB
d minimum layer thickness of coating layer between AB

## Claims

1. A tire comprising a depthwise structure on at least a part of a sidewall portion, the depthwise structure comprising, in a depth direction from a point on a sidewall portion outer surface, a depthwise part I from the sidewall portion outer surface to 0.5 mm and a depthwise part II from 0.5 mm to 1.0 mm, wherein: the depthwise part I and the depthwise part II satisfy the following requirement:

   the depthwise part I: a peak temperature T1 (°C) of $\tan\delta$ is -20°C or more and -5°C or less, and when $\tan\delta$ at the peak temperature T1 (°C) is $\alpha 1$ and a storage modulus at the peak temperature T1 (°C) is E'1 (MPa), $\alpha 1 \leq 0.90$ and E'1$\geq$5MPa; and
   the depthwise part II: when $\tan\delta$ at the peak temperature T1 (°C) is $\alpha 2$, and a storage modulus at the peak temperature T1 (°C) is E'2 (MPa), $\alpha 2 < \alpha 1$ and E'2<E'1.

2. The tire according to claim 1, wherein:
   $\tan\delta$ at 60°C of the depthwise part I is 0.30 or less.

3. The tire according to claim 1 or 2, wherein:
   the depthwise structure is formed by:

   a rubber layer; and
   a coating layer coating the rubber layer and forming the sidewall portion outer surface.

4. The tire according to claim 3, comprising a coated region having the depthwise structure formed by the rubber layer and the coating layer, wherein:
   in a tire widthwise cross section, there exist two points A, B in the coated region on an interface of the rubber layer and the coating layer, such that when a length of a segment AB is X and a length of the interface between A and B is Y, X$\geq$1mm and Y/X$\geq$1.1, except for two points at which the segment AB crosses outside the tire.

5. A method for manufacturing the tire according to any one of claims 1 to 4, comprising: stacking a foam on a surface of an unvulcanized rubber, and vulcanizing.

## Patentansprüche

1. Reifen, der eine Struktur in Tiefenrichtung an wenigstens einem Teil eines Seitenwandabschnitts umfasst, wobei die Struktur in Tiefenrichtung, in einer Tiefenrichtung von einem Punkt an einer Seitenwandabschnitt-Außenfläche aus, einen Teil I in Tiefenrichtung von der Seitenwandabschnitt-Außenfläche bis 0,5 mm und einen Teil I in Tiefenrichtung von 0,5 mm bis 1,0 mm umfasst, wobei der Teil I in Tiefenrichtung und der Teil II in Tiefenrichtung die folgende Voraussetzung erfüllen:

EP 3 388 261 B1

der Teil I in Tiefenrichtung: eine Spitzentemperatur T1 (°C) von tan $\delta$ beträgt - 20°C oder mehr und -5°C oder weniger, und wenn tan $\delta$ bei der Spitzentemperatur T1 (°C) $\alpha$1 ist und ein Speichermodul bei der Spitzentemperatur T1 (°C) E'1 (MPa) ist, $\alpha$1 $\leq$ 0,90 und E'1 $\geq$ 5 MPa, und
der Teil II in Tiefenrichtung: wenn tan $\delta$ bei der Spitzentemperatur T1 (°C) $\alpha$2 ist und ein Speichermodul bei der Spitzentemperatur T1 (°C) E'2 (MPa) ist, $\alpha$2 < $\alpha$1 und E'2 < E'1.

2. Reifen nach Anspruch 1, wobei:
tan $\delta$ bei 60°C des Teils I in Tiefenrichtung 0,30 oder weniger beträgt.

3. Reifen nach Anspruch 1 oder 2, wobei:
die Struktur in Tiefenrichtung durch Folgendes gebildet wird:

eine Gummischicht und
eine Überzugsschicht, welche die Gummischicht überzieht und die Seitenwandabschnitt-Außenfläche bildet.

4. Reifen nach Anspruch 3, der einen überzogenen Bereich umfasst, der die Struktur in Tiefenrichtung aufweist, die durch die Gummischicht und die Überzugsschicht gebildet wird, wobei:
in einem Querschnitt in Breitenrichtung, es zwei Punkte A, B in dem überzogenen Bereich an einer Grenzfläche der Gummischicht und der Überzugsschicht gibt, so dass, wenn eine Länge einer Strecke AB X ist und eine Länge einer Grenzfläche zwischen A und B Y ist, X $\geq$ 1 mm und Y / X $\geq$ 1,1, mit Ausnahme zweier Punkte, an denen die Strecke AB außerhalb des Reifens kreuzt.

5. Verfahren zum Herstellen des Reifens nach einem der Ansprüche 1 bis 4, das Folgendes umfasst: Stapeln eines Schaumstoffs auf einer Oberfläche eines nicht vulkanisierten Kautschuks und Vulkanisieren.

**Revendications**

1. Bandage pneumatique, comprenant une structure dans le sens de la profondeur sur au moins une partie d'une partie de flanc, la structure dans le sens de la profondeur comprenant, dans une direction de la profondeur à partir d'un point sur une surface externe de la partie de flanc, une partie dans le sens de la profondeur I s'étendant à partir de la surface externe de la partie de flanc vers 0,5 mm et une partie dans le sens de la profondeur II de 0,5 mm à 1,0 mm, dans lequel la partie dans le sens de la profondeur I et la partie dans le sens de la profondeur II satisfont l'exigence ci-dessous :

la partie dans le sens de la profondeur I : une température de pointe T1 (°C) de tan $\delta$ est -20°C ou plus et à -5°C ou moins, et lorsque tan $\delta$, en présence de la température de pointe T1 (°C) est $\alpha$1 et un module de conservation, en présence de la température de pointe T1 (°C) est E'1 (MPa) $\alpha$1 $\leq$ 0,90 et E'1 $\geq$ 5MPa ; et
la partie dans le sens de la profondeur II : lorsque tan $\delta$, en présence de la température de pointe T1 (°C) est a2 et un module de conservation, en présence de la température de pointe T1 (°C) est E'2 (MPa), a2 < $\alpha$1 et E'2 < E'1.

2. Bandage pneumatique selon la revendication 1, dans lequel :
tan $\delta$, en présence d'une température de 60°C de la partie I dans le sens de la profondeur est 0,30 ou moins.

3. Bandage pneumatique selon les revendications 1 ou 2, dans lequel :
la structure dans le sens de la profondeur est formée par :

une couche de caoutchouc ; et
une couche de revêtement recouvrant la couche de caoutchouc et formant la surface externe de la partie de flanc.

4. Bandage pneumatique selon la revendication 3, comprenant une région revêtue ayant une structure dans le sens de la profondeur formée par la couche de caoutchouc et la couche de revêtement ; dans lequel :
dans une section transversale dans le sens de la largeur du bandage pneumatique, et existe deux points A, B dans la région revêtue, sur une interface de la couche de caoutchouc et de la couche de revêtement, de sorte que, lorsqu'une longueur d'un segment AB est X et une longueur de l'interface entre A et B est Y, X $\geq$ 1 mm et Y/X $\geq$ 1,1, à l'exception de deux points au niveau desquels le segment AB croise à l'extérieur du bandage pneumatique.

5. Procédé de fabrication du bandage pneumatique selon l'une quelconque des revendications 1 à 4, comprenant les étapes d'empilement d'une mousse sur une surface d'un caoutchouc non vulcanisé, et de vulcanisation.

# FIG. 1A

# FIG. 1B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006083264 A
- JP H05169927 A

- EP 1938957 A1